Europäisches Patentamt

(19) European Patent Office

Office européen des brevets

(11) Publication number: **0 215 340**

**A2**

(12) # EUROPEAN PATENT APPLICATION

(21) Application number: 86111754.7

(51) Int. Cl.⁴: **B65G 21/18** , B65G 13/11

(22) Date of filing: 25.08.86

(30) Priority: 13.09.85 IT 2215585

(43) Date of publication of application:
25.03.87 Bulletin 87/13

(84) Designated Contracting States:
AT CH DE FR GB IT LI NL SE

(71) Applicant: CIVIEMME S.r.l.
Via per Cressa
I-28010 Bogogno (Novara)(IT)

(72) Inventor: Rebecchi, Lorenzo
Via Macchi 1
I-28066 Galliate Novara(IT)

(74) Representative: Zanella, Ireneo et al
de Dominicis & Partners s.a.s. Via Brera, 6
I-20121 Milano(IT)

(54) **A device for conveying the signatures delivered by a rotary press.**

(57) A signature-conveying device, comprising one or
more helicoidal upward and downward tracks (8, 9),
designed to run the signatures delivered by a rotary
press or any other type of printing press as a
continuous scaled belt. Said tracks (8,9) consist of a
column (12) provided with a jacket (13) supporting a
number of carrying rollers (11), defining said
helicoidal path or track, and of an internal drive shaft
(14) designed to operate said rollers (11) by means
of suitable drive units (17, 18, 19, 22). As no press-
ing devices are used, the signatures (4) are shifted
without suffering any damage whatsoever.

FIG. 1

This invention relates to a device for conveying the signatures delivered by a rotary press.

The signatures delivered by rotary presses as a continuous stream of overlapping units are normally conveyed, by means of a suitable device, towards different locations where said signatures undergo specific handling , e.g. stacking stations, distribution stations, and the like. Soundproofing, flameproofing, and safety regulations (such as those relating to the use of toluene, which is known to be harmful to health) require that the rotary presses be located in special facilities at some distance -up to 100 metres -from the rooms in which the signatures are gathered, stacked and handled, such distance depending, furthermore, on the shape and structure of the printing works' stores or buildings. As the installation of normal ground conveyance units would imply a considerable waste of space and would seriously hinder or limit the movement of the trolleys, lift trucks, transport vehicles etc. used for shop service, these conveyors are normally designed as overhead units. Depending on the structure of the building or on the layout of the various handling stations, these conveyors develop along paths which often run across several floors of one and the same building, e.g. in modern buildings, one branch of said conveyors may be so designed as to lead directly to the area where the goods are loaded onto the distribution vehicles, generally at roadway level. These conventional conveyors consist, essentially, of a feeder unit moving along a guide bar and supporting a number of grippers (i.e. sprung clamping devices). Each gripper is designed to carry a signature.

There are, however, serious drawbacks to these conveyors. For one thing, the grippers exert considerable pressure on the signature sheets during conveyance, hence the ink -which has not dried yet -is undesirably transferred from one sheet of the signature to another, resulting in ink-stained areas in which the print is hardly, if at all, legible. Secondly, an exceedingly tight grip often results in permanent folds and deformations, which persist even after removing the signature from the conveyor. While these faults may sometimes be considered acceptable for newspaper signatures where the quality of the print and format is rather poor, they cannot be tolerated for middling-and high-quality signatures, such as magazines, where any such defect may prove economically detrimental to the relevant publisher(s).

## SUMMARY OF THE INVENTION

It is a primary object of this invention to provide an overhead device for conveying the signatures delivered by a rotary press, whereby the signatures are carried in the most effective of ways without suffering any damage whatsoever -such as ink stains, resulting from exceedingly strong pressure exerted on the signature sheets, or folding deformations -the overhead conveyor running along any desired path, depending on the specific requirements.

A further object of this invention is to provide a conveyor with rather limited overall dimensions even where rotary presses with two or more delivery ends are employed, as reduced size offers considerable adavantages in terms of a more efficient use of the area available within the printing works.

These and further objects of this invention are achieved with a conveying device comprising at least one vertical section developing along a spiral or helicoidal path, the signatures being conveyed as a continuous stream of overlapping units along said path.

This design offers a considerable advantage in that it enables the signatures to dry thoroughly during conveyance without the use of grippers, which would lead to the damaging effects described earlier herein.

In the preferred embodiment, the twisting vertical section designed to convey the signatures comprises a supporting column supplied with an outer jacket, said jacket carrying a number of adjacent feeder rollers, defining said spiral path, and with an internal axial shaft designed to drive said rollers, some shaft-driving units and transmission devices being interposed between said drive shaft and said feeder rollers.

The design developed in accordance with this invention offers several advantages, including the following:

-by defining the vertical conveyance section as a helicoidal path, namely a sequence of superelevated or parabolic curves, the scaled stream of signatures is carried continuously along the helicoidal path without forming any gaps in the stream itself - a defect commonly referred to as "splitting", namely a shift resulting in the formation of gaps in a stream of scaled signatures conveyed along a plane curve (e.g. a quarter bend); thus, the signatures are conveyed in the most effective of ways,

-a plan view of the device readily shows that the helicoidal path is circular in shape; this means that the tangential lines defining the rectilinear sections leading to and from the helicoidal path may be designed at will and in accordance with one's specific requirements,

-two or more helicoidal paths may be fitted, like multi-start screws, onto one and the same column; this means that a single column may be used to carry several streams of signatures simultaneously delivered by the rotary press,

-limited overall dimensions,

-modular construction both of the column, which is achieved by employing as many modular column sectors as may be required at any given time, and of the conveying unit as a whole -that is, the conveyor track may be raised or lowered to meet specific requirements by simply using a column constructed to the same design,

-the signatures are conveyed without suffering any damage whatsoever, as no pressure is exerted on them,

-the ink is given time to dry thoroughly during conveyance,

-the stretch between the helicoidal-path columns may be developed as a virtually horizontal section, and may be advantageously driven by the operation of the helicoidal path itself.

BRIEF DESCRIPTION OF THE DRAWING

Further advantages, details and features of the conveying system according to the invention will become apparent from the following description, relating to the enclosed drawing, which offers a - schematic illustration of a preferred embodiment of this invention.

Fig. 1 is a front elevation of a path or track with the relevant devices provided for by the invention;

Fig. 2 is a plan view of the above;

Fig. 3 offers an illustration of the principle according to which the helicoidal track is operated; and

Fig. 4 is a detail illustrating one particular mode of oper ating the rollers defining the helicoidal track.

DESCRIPTION OF THE PREFERRED EMBODIMENT

As regards the aforementioned figures, in which the device is drawn in different scales, each component is identified through a specific reference number.

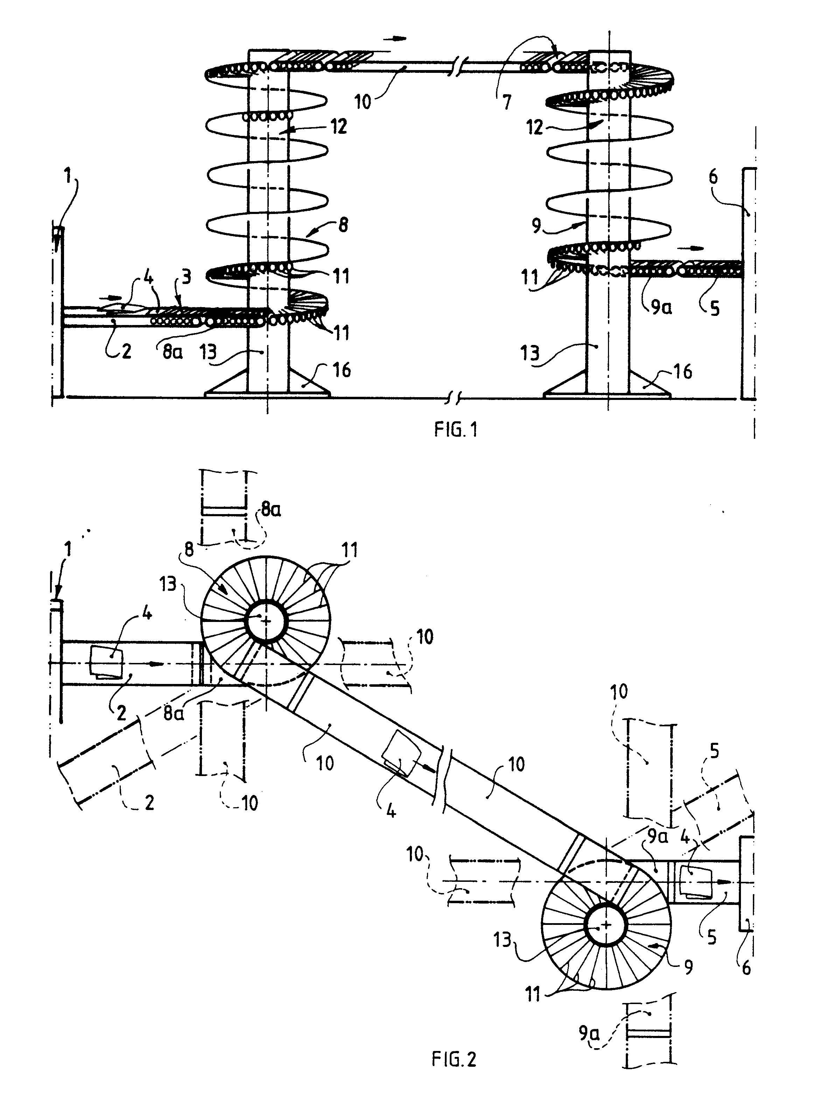

In Fig. 1, number 1 refers to a rotary press, or a folding machine, featuring a conventional outlet section 2 delivering a stream 3 of signatures 4, in the form of newspapers, magazines, and the like, arranged in the conventional overlapping or scaled configuration. The inlet section of, e.g., a stacker 6 is indicated at 5. The conveying device according to the invention is marked, on the whole, with number 7, said device being placed between said outlet section 2 and inlet section 5. In the drawing under consideration, the conveyor consists, essentially, of an upward section 8, a downward section 9, and an intervening section 10. According to the invention, the vertical sections or tracks 8 and 9 follow a helicoidal path which, in this particular instance, is defined by a number of adjacent feeder rollers 11, on which the scaled stream 3 is conveyed, said stream of signatures running from outlet 2 to inlet 5 while retaining a scaled configuration. The two vertical sections 8 and 9 are structurally similar. Each vertical section comprises, essentially, a supporting column 12 provided with an outer jacket 13 carrying a number of the aforementioned feeder rollers 11. Jacket 13 houses an axial drive shaft 14, designed to operate said feeder rollers 11 by means of suitable transmission gears, which will be described in detail hereinafter. In this particular illustration, the shaft 14 is driven by a geared motor 15. The lower end of the shaft 14 is supported by the bedplate 16 of said column.

The projecting rollers 11 are suitably supported by jacket 13, for instance by means of one or more conventional rolling bearings, and are cone-shaped. Said feeder rollers 11 are arranged side-by-side with one another so as to define a helicoidal path of the desired pitch, e.g. 40 cms.

The driving units placed between the drive shaft 14 and said feeder rollers 11 comprise, in this particular example, a number of disks 17 integrally fitted onto the shaft 14, e.g. by means of keys (not shown in the figures), and evenly spaced out thereon. Each of said disks 17 is designed to engage a wheel 18 placed at the end of a small oscillating shaft 19, which is in turn supported by the jacket 13 of the column 12, its other end 20 projecting therefrom. Said oscillatory connection, which may be effected by means of conventional rolling bearings, is schematically indicated at 21.

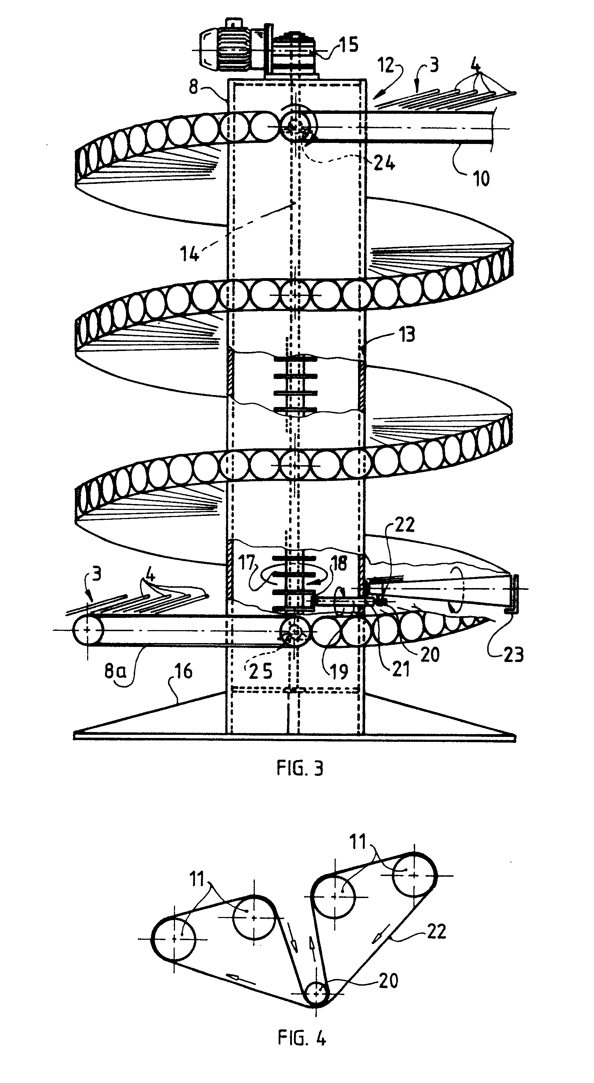

The projecting end 20 of each small shaft 19 is provided with a belt 22, the development of which is particularly apparent from the sectional view shown in Fig. 4. By running said belt according to this arrangement, a whole group of feeder rollers 11 (four, in this specific illustration) may be driven in the same direction of rotation. The adjacent group of four feeder rollers is driven by the adjacent disk 17 and so on. This subdivision of the rollers into groups of four is desirably effected in order to ensure that, in the event of failure in any one belt 22, conveyance may be effectively carried on by the relevant four rollers 11 which, having been made idle, would be driven by the stream 3 of scaled signatures itself. An outer toeboard, marked 23, running all along the edge of the helicoidal path is desirably provided for safety purposes. Numbers 24 and 25 refer to the bevel gearing used in order to transmit the motion of the drive shaft 14 to the intervening section 10 and to the inlet section 8a of the column 8, thereby operating both. The required force of engagement, or friction, between each wheel 18 and the relevant disk 17 is provided by the tension of the respective belt 22 as well as by the weight itself of the inner portion of the relevant shaft 19, resulting in the effective operation of the thereto connected feeder rollers 11.

In order to ensure effective conveyance of the scaled stream 3 along the helicoidal path without causing any relative shifts which may result in the formation of undesired gaps between the signatures 4 , the individual feeder rollers 11 may be advantageously designed with a slightly upward raking axis, so as to define the helicoidal route as a continuous parabolic curve, the extent of such inclination depending on the type of signatures that are to be conveyed most frequently.

The above structural description readily shows that the path developed in accordance with the invention is effective in performing the desired function and that the advantages referred to in the introductory part of this patent application are actually achieved. For the signatures are given enough time to dry during conveyance and are not subjected to pressure, as may be exerted by the aforementioned grippers; consequently, both the print and the overall format of the signatures are flawless. With the device under consideration the scaled stream of signatures delivered by the rotary press need not be transformed into a stream of suspended signatures, hence the latter may be conveyed at high speed while retaining the desired line-up.

From a constructive point of view, the vertical conveyance device may be used to solve virtually any problem which may arise in connection with the transfer of a stream of signatures from one plane to another, whether higher or lower; for modular construction offers the opportunity to employ the device in any printing facility whatsoever, regardless of shape or structure, without calling for adaptation or conversion works. The device proves extremely flexible also as regards the location of the vertical paths, as these may be connected by means of an intervening section running in any desired direction. The dotted lines shown in Fig. 2 refer to a number of different options defining just as many inlets to one and the same path, developing around column 8. the flexibility of this design is further evidenced by the fact that the inlet and outlet sections of the helicoidal path may be set at any desired height of the column, as shown in Fig. 1, depending on the specific requirements. In addition, the overhead conveyance unit may feature one or more columns, depending on the specific requirements of the user, overhead conveyance being effected in accordance with the same underlying principle.

Structurally speaking, the helicoidal-path columns may consist of a number of modular sectors. As noted earlier, one and the same column may carry two or more helicoidal paths, this means that a considerable amount of space may be saved where two or more signature-conveying paths are employed.

In practice, all individual components may be replaced with other technically and/or functionally equivalent ones without exceeding the scope of this inventive concept. For instance, the roller track may be replaced with a helicoidal path comprising conventional link chains equipped with supporting plates. While these chains require greater care in terms of expansion compensation, they are effective in conveying the scaled signature steam evenly. Where this design is preferred, the drive shaft must be replaced by conveying chains and the helicoidal path must be defined by rails, slidingly supporting said conveying chains.

Structural alterations involving, for instance, the replacement of the conical rollers with conventional depressed or parallel-ring ones, or the cantilever roller support, or the replacement of the disks 17 of the wheels 18 with suitable gears, and so on, can be effected without difficulty by technically skilled personnel.

Both the rollers and the other driving units may be manufactured in any desired size and with any given material. It is readily apparent that any combination of said vertical helicoidal path with other printing presses or equipment for purposes which may be considered similar or related to the ones set out hereinabove should fall within the scope of this invention.

All of the features to be inferred from the description, claims and drawing are regarded as being substantial to this invention, either singly or in any combination thereof.

## Claims

1. A device for conveying the signatures delivered by a rotary press, or by other printing presses, its conveyance path comprising at least one helicoidal signature-conveying vertical section - (8; 9), whereon the signatures (4) are conveyed while retaining a scaled-stream configuration.

2. A conveying device, according to claim 1, comprising, in its conveyance path, at least a first and a second helicoidal signature-conveying vertical section (8; 9), a connecting path (10) being placed between the above two vertical sections - (8;9).

3. A conveying device, according to claims 1 and 2, wherein the aforementioned helicoidal vertical section(s) (8; 9) consist(s) of a supporting column (12) supplied with an outer jacket (13) carrying a number of adjacent feeder rollers (11), said rollers defining the aforementioned helicoidal path - (8;9) and wherein each supporting column (12) comprises an inner axial shaft (14) designed to drive said feeder rollers (11) as well as such units - (15) as are required in order to operate said drive shaft (14) and such gearing (17-22) as is required to drive said feeder rollers (11), said gearing (17-22) being placed between said drive shaft (14) and the rollers (11) themselves.

4. A conveying device, according to any one of claims 1 and 3, wherein said adjacent feeder rollers (11) defining said helicoidal paths or sections (8;9) consist of conical cantilever rollers individually supported, by means of rolling bearings, by said outer jacket (13) of the respective supporting column (12).

5. A supporting device, according to any one of claims 1 and 3, wherein the gearing (17-22) provided between said drive shaft (14) and said feeder rollers (11) respectively comprises, for any group of e.g. four adjacent rollers (11), a transmission disk (17) designed as an integral member of said drive shaft (14) and in frictional engagement with a splined wheel (18) placed at the near end of a small shaft (19), said shaft being supported in such a way as to be unable to shift axially but freely oscillating around said outer jacket (13), a belt (22) placed at the projecting end (20) of said shaft (19) engaging said feeder rollers (11) forming the group of e.g. four rollers so as to drive them (11) in the same direction of rotation.

6. A conveying device, according to any one of the above claims, wherein said drive shaft (14) is equipped with bevel gears (24, 25) for driving the inlet path (5) and the outlet path (2) of the scaled stream (3) of signatures (4) simultaneously.

7. A conveying device, according to any one of the above claims, wherein said helicoidal path (8;9)supporting columns (12) feature a modular construction, all modules being equal in height.

8. A conveying device, according to any one of the above claims, wherein two or more helicoidal paths (8;9) are carried by one and the same column (12).

9. A conveying device, according to any one of the above claims, wherein the helicoidal path (8;9) designed to convey the scaled stream (3) of signatures (4) is formed by link chains equipped with supporting plates, said chains sliding on rails defining said helicoidal path.

FIG.1

FIG.2

FIG. 3

FIG. 4